# EUROPÄISCHE PATENTSCHRIFT

(11) **EP 1 622 397 B1**
(45) Veröffentlichungstag und Bekanntmachung des Hinweises auf die Patenterteilung: **27.06.2007**
(21) Anmeldenummer: 04017984.8
(22) Anmeldetag: 29.07.2004
(51) Int. Cl.: H04Q 3/76, H04Q 3/545, H04Q 3/00

(54) **Telekommunikationsnetz**
Telecommunication network
Réseau de télécommunication

(43) Veröffentlichungstag der Anmeldung: 01.02.2006
(73) Patentinhaber: SIEMENS AKTIENGESELLSCHAFT, 80333 München (DE)
(72) Erfinder: Geissler, Michael, 2000 Stockerau (AT); Melidis, Andreas, GR-145 64 Nea Kifissia / Athens (GR); Papenjohann, Wilhelm, 81379 München (DE); Weber, Hans-Jürgen, 81241 München (DE)
(74) Vertreter: Berg, Peter

(56) Entgegenhaltungen:
- WO-A-02/078303
- US-A- 5 333 185
- US-A- 5 764 749

## Beschreibung

Die Erfindung betrifft ein Telekommunikationsnetz.

Herkömmliche Telekommunikationsnetze wie z.B. Fernsprechnetze nach dem Zeitmultiplexprinzip sind zur Zeit aus historischen Gründen national strukturiert. Die Anbindung der nationalen Fernsprechnetze an die internationale Ebene erfolgt durch sogenannte Auslandsvermittlungsstellen. In Deutschland wird beispielsweise der Auslandstelefonverkehr über acht Auslandsvermittlungsstellen abgewickelt.

Jede Verbindung ins Ausland oder aus dem Ausland muss daher über eine dieser Auslandsvermittlungsstellen geführt werden.

Adressiert wird der jeweils gewünschte Teilnehmer dabei über die internationale Rufnummer, die gemäß ITU-T festgelegt ist und deren Aufbau an folgendem Beispiel erläutert werden soll.

| 00 43 2752 51447 | |
|---|---|
| 00 | Verkehrsausscheidungsziffer |
| 43 | Länderkennzahl |
| 2752 | Bereichskennzahl (Ortsvorwahl, Netzkennzahl oder Dienstekennung) |
| 51447 | Teilnehmerrufnummer |

Ein derartiges Telekommunikationsnetz ist aus der Patentschrift US 5 764 749 bekannt.

Der Erfindung liegt nun die Aufgabe zugrunde, ein multinationales Telekommunikationsnetz mit vereinfachter Struktur anzugeben.

Erfindungsgemäß geschieht dies mit einem Telekommunikationsnetz, bei dem eine Vermittlungsstelle vorgesehen ist, an der Teilnehmer aus unterschiedlichen Ländern angeschlossen sind und bei dem in der Vermittlungsstelle Mittel zur Umkodierung der Rufnummer in der Weise vorgesehen sind, dass die in der Länderkennzahl enthaltene Information über den Teilnehmer in die Bereichskennzahl integriert wird.

Erfindungsgemäß kann bereits mit einer einzelnen Vermittlungsstelle ein Telekommunikationsnetz für mehrere Länder aufgebaut werden, über welches die Teilnehmer mit der standardisierten internationalen Rufnummer erreicht werden können.

Eine vorteilhafte Ausgestaltung des erfindungsgemäßen Telekommunikationsnetzes erhält man, wenn für die Kodierung der Länderinformation die 6 Buchstaben des Hexadezimalcodes verwendet werden und eine einstellige Hexdezimalcode-Darstellung der Länderinformation in die Bereichskennzahl integriert ist.

Damit ist eine besonderes einfache und zuverlässige Kodierung von bis zu 6 unterschiedlichen Ländern gegeben.

Günstig ist es weiterhin, wenn die Verbindung zwischen Vermittlungsstelle und den Teilnehmern über ein Telekommunikationsnetz nach dem Internet-Protokoll verläuft. Herkömmliche Ortsnetze, bei denen die Verbindung zwischen Vermittlungsstelle und Teilnehmer über (Kupfer) Zweidrahtleitungen erfolgt, sind durch die Dämpfungseigenschaften der Leitungen in ihren Ausdehnungen begrenzt. Durch die Einbeziehung von Computernetzen, beispielsweise nach dem Internet Protokoll können diese Einschränkungen aufgehoben werden. Zweckmäßig ist dabei auch der Einsatz des Media Gateway Controller Protocols MGCP, das besonders für Internet Telefonie zwischen dem Internet und herkömmlichen Telefonnetzen geschaffen wurde und dafür ein Verbindungssteuerungsprotokoll zur Verfügung stellt.

Die erfindungsgemäße Lösung umfasst auch eine Vermittlungsstelle bei der Mittel zum Anschluss von Teilnehmern aus unterschiedlichen Ländern vorgesehen sind und bei der Mittel zur Umkodierung der Rufnummer in der Weise vorgesehen sind, dass die in der Länderkennzahl enthaltene Information über den Teilnehmer in die Bereichskennzahl integriert wird.

Die Erfindung wird anhand einer Figur näher erläutert, welche beispielhaft die Struktur eines erfindungsgemäßen Telekommunikationsnetzes zeigt.

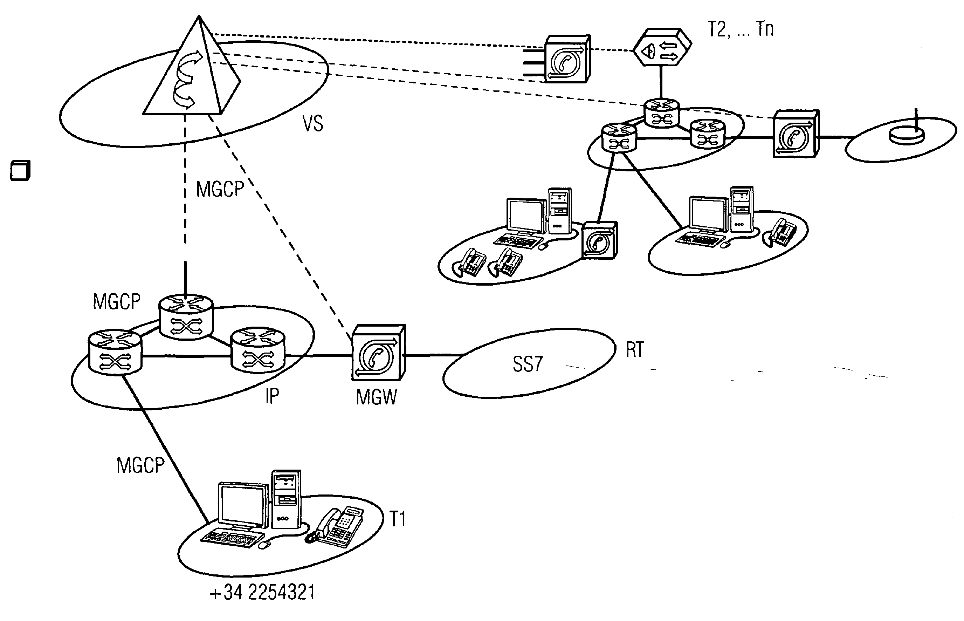

Das in der Figur dargestellte Multinationale Kommunikationsnetz umfasst eine erfindungsgemäße Vermittlungsstelle VS, beispielsweise vom Typ hiE 9200 V3 der Siemens AG.

Diese Vermittlungsstelle ist über Computernetze nach dem Internet Protokoll IP1, IP2 mit Teilnehmern T1, ..TN verbunden. Als erster Teilnehmer T1 ist beim Ausführungsbeispiel ein Internetfähiges Telefongerät der Fa. Siemens vom Typ IP Censet vorgesehen. Die Verbindung zwischen den Computernetzen und den Teilnehmern T1, ... Tn einerseits und der Vermittlungsstelle VS andererseits erfolgt nach dem Media Gateway Controller Protocol MGCP.

Der erste Teilnehmer T1 ist beim Ausführungsbeispiel in Spanien lokalisiert, seine Telefonnummer könnte beispielsweise lauten +34 2254321.

Die Ziffer 34 ist dabei die Länderkennzahl für Spanien. Die Vermittlungsstelle VS ist hingegen in Deutschland positioniert.

Ein an den ersten Teilnehmer gerichteter Anruf von einem beliebigen weiteren Teilnehmer RT wird daher aufgrund der Länderkennzahl zuerst nach Spanien geroutet.

Im spanischen Telefonnetz wird aufgrund der Telefonnummer festgestellt, dass der gerufene Teilnehmer T1 an das erfindungsgemäße multinationale Kommunikationsnetz eines bestimmten Betreibers angeschlossen ist. Dies wird mit Hilfe entsprechender Programme durch Auswertung der Telefonnummer, beispielsweise der Netzkennzahl bewerkstelligt.

Der Übergang vom spanischen Telefonnetz in das erfindungsgemäße multinationale Kommunikationsnetz erfolgt über ein Mediagateway MGW, beispielsweise vom Typ hiG 1100 der Siemens AG, das in Spanien positioniert ist. Weitere Mediagateways sind als Zugänge zum erfindungsgemäßen multinationale Kommunikationsnetz in den weiteren Ländern vorgesehen, für welche dieses Netz eingerichtet ist.

Vom Mediagateway MGW wird der Ruf über das erste Computernetz nach dem Internet Protokoll IP1 an die Vermittlungsstelle VS weitergeleitet.

In dieser wird erfindungsgemäß aus der Länderkennzahl die Information über das Land des Teilnehmers ermittelt, diese mit den 6 Buchstaben des Hexadezimalcodes kodiert und eine einstellige Hexadezimalcode-Darstellung der Länderinformation in die Bereichskennzahl integriert.

So wird beim Ausführungsbeispiel für Österreich (43) der Buchstabe A verwendet, für Deutschland (49) der Buchstabe B und für Spanien (34) der Buchstabe D.

Insgesamt können mit den Buchstaben des Hexadezimalcodes A, B, C, D, E und F also 6 unterschiedliche Länder erfasst werden.

Die ursprüngliche Rufnummer des gerufenen Teilnehmers +34 22 54321 wird also für die weitere Behandlung in der Vermittlungsstelle umgewandelt in D22 54321. Die Information über das Land des Teilnehmers ist entsprechend dem standardisierten Aufbau der Rufnummer damit in die Ortskennzahl integriert.

Auf der Basis der umkodierten Rufnummer erfolgt die weitere Behandlung des Rufes in der Vermittlungsstelle. Die neue multinationale Ortskennzahl ersetzt die herkömmliche Ortskennzahl in allen vermittlungstechnischen Abläufen und Prozeduren, welche auf die Ortskennzahl zurückgreifen. Dabei handelt es sich insbesondere um die Ruflenkung und die Vergebührung.

Dazu wird auf "Siegmund, Gerd: Technik der Netze; Gerd Siegmund.-4., neubearb. und erw. Auflage - Heidelberg: Hüthig 1999 ISBN 3-7785-2637-5 verwiesen.

Beim vorliegenden Ausführungsbeispiel wird durch die Vermittlungsstelle VS eine Sprachverbindung zwischen dem Anrufer und dem ersten Teilnehmer T1 über das erste Computernetz nach dem Internet Protokoll IP1 und entsprechend dem Media Gateway Controller Protocol MGCP hergestellt und verwaltet.

## Patentansprüche

1. Telekommunikationsnetz, **dadurch gekennzeichnet dass** eine Vermittlungsstelle (VS) vorgesehen ist, an der Teilnehmer (T1, ... TN) aus unterschiedlichen Ländern angeschlossen sind und dass in der Vermittlungsstelle (VS) Mittel zur Umkodierung der Rufnummer in der Weise vorgesehen sind, dass die in der Länderkennzahl enthaltene Information über den Teilnehmer (T1) in die Bereichskennzahl integriert wird.

2. Telekommunikationsnetz nach Anspruch 1, **dadurch gekennzeichnet, dass** für die Kodierung der Länderinformation die 6 Buchstaben des Hexadezimalcodes verwendet werden und eine einstellige Hexadezimalcode-Darstellung der Länderinformation in die Bereichskennzahl integriert ist.

3. Telekommunikationsnetz nach Anspruch 1 oder 2, **dadurch gekennzeichnet, dass** die Verbindung zwischen Vermittlungsstelle (VS) und den Teilnehmern (T1, ...TN) über ein Computernetz nach dem Internet-Protokoll verläuft.

4. Telekommunikationsnetz nach Anspruch 3, **dadurch gekennzeichnet, dass** die Kommunikation zwischen Vermittlungsstelle (VS) und den Teilnehmern (T1, ...TN) nach dem Media Gateway Controller Protocol (MGCP) verläuft.

5. Vermittlungsstelle zum Einsatz in einem der Telekommunikationsnetze gemäß Anspruch 1 bis 3, **dadurch gekennzeichnet, dass** Mittel zum Anschluss von Teilnehmern (T1, ...TN) aus unterschiedlichen Ländern vorgesehen sind und dass Mittel zur Umkodierung der Rufnummer in der Weise vorgesehen sind, dass die in der Länderkennzahl enthaltene Information über den Teilnehmer in die Bereichskennzahl integriert wird.

## Claims

1. Telecommunication network, **characterized in that** an exchange (VS) is provided to which subscribers (T1, ... TN) from different countries are connected, and that in the exchange (VS) means are provided for transcoding the telephone number in such a way that the information about the subscribers (T1) contained in the country code is integrated into the area code.

2. Telecommunication network in accordance with claim 1, **characterized in that** the 6 characters of the hexadecimal code are used for transcoding the country information and a single-character hexadecimal code representation of the country information is integrated into the area code.

3. Telecommunication network in accordance with claim 1 or 2, **characterized in that** the connection between exchange (VS) and the subscribers (T1, ... TN) runs over a computer network operating according to the Internet Protocol.

4. Telecommunication network in accordance with claim 3, **characterized in that** the communication between exchange (VS) and the subscribers (T1, ... TN) runs in accordance with the Media Gateway Control Protocol (MGCP).

5. Exchange for use in one of the telecommunication networks according to claim 1 to 3, **characterized in that** means are provided for connecting subscribers (T1, ... TN) from different countries and that means are provided for transcoding the telephone number such that the information about the subscribers contained in the country code is integrated into the area code.

## Revendications

1. Réseau de télécommunications, **caractérisé en ce qu'**il est prévu un central téléphonique (VS) auquel sont raccordés des abonnés (T1, ...TN) de différents pays et **en ce qu'**il est prévu dans le central téléphonique (VS) des moyens de recodage des numéros d'appel de façon à ce que l'information relative à l'abonné T1 et contenue dans l'indicatif de pays soit intégrée dans l'indication de zone.

2. Réseau de télécommunications selon la revendication 1, **caractérisé en ce que** les 6 lettres du code hexadécimal sont utilisées pour coder l'information de pays et une représentation hexadécimale à un seul chiffre de l'information de pays est intégrée dans l'indicatif de zone.

3. Réseau de télécommunications selon la revendication 1 ou 2, **caractérisé en ce que** la liaison entre le central téléphonique (VS) et les abonnés (T1, ...TN) est effectuée sur un réseau informatique selon le protocole Internet.

4. Réseau de télécommunications selon la revendication 3, **caractérisé en ce que** la communication entre le central téléphonique (VS) et les abonnés (T1, ...TN) est effectuée selon le protocole Media Gateway Controller Protocol (MGCP).

5. Central téléphonique utilisant l'un des réseaux de télécommunications selon la revendication 1 à 3, **caractérisé en ce qu'**il est prévu des moyens de raccordement des abonnés (T1, ...TN) de différents pays et **en ce qu'**il est prévu des moyens de recodage des numéros d'appel de façon à ce que l'information relative à l'abonné et contenue dans l'indicatif de pays soit intégrée dans l'indicatif de zone.
